# EUROPEAN PATENT APPLICATION

(11) **EP 4 205 547 A2**
(43) Date of publication of application: **05.07.2023**
(21) Application number: 22216557.3
(22) Date of filing: 23.12.2022
(51) Int. Cl.: A01N 39/02, A01N 43/80, A01N 43/12, A01N 37/26, A01N 33/12, A01N 47/22, A01P 13/00

(54) **HERBICIDE COMBINATIONS**

(30) Priority: 29.12.2021 EP 21306956
(71) Applicant: UPL Corporation Limited, Port Louis (MU); UPL Europe Ltd, Warrington, Cheshire WA3 6YN (GB)
(72) Inventor: POLLET, Jean-Philippe, Warrington, Cheshire, WA3 6YN (GB); BONNET, Marc, 4000 Liège (BE); HUART, Gerald, 91460 Marcoussis (FR); D'INNOCENZO, Sebastien, 08019 Barcelona (ES)
(74) Representative: J A Kemp LLP

(57) **Abstract**

The present disclosure relates to a herbicidal combination comprising napropamide/napropamide-M and a second herbicide thereof. The present disclosure also relates to a herbicidal composition and a method for controlling weeds using the herbicidal combination thereof.

## Description

### FIELD OF THE DISCLOSURE

The present disclosure relates to a herbicidal combination for controlling growth of unwanted plants/weeds in cereal crops. More particularly, the present invention also relates to a herbicidal composition comprising herbicidal combinations thereof. More particularly, the present disclosure relates to a method for controlling the growth of unwanted plants/weeds in cereal crops by applying the herbicidal combinations to said plant or to a locus thereof.

### BACKGROUND OF THE DISCLOSURE

Herbicides are chemical substances, which are used to specifically control the unwanted plants/weeds. The mode of action for herbicides is a biochemical or a physical mechanism, which it uses to control unwanted plants/weeds. There are certain species of unwanted plants/weeds or groups of unwanted plants/weeds, which are not susceptible to certain herbicides. This may be because either the herbicides use different biochemical pathways, or the herbicides have slightly different enzymes. Herbicides are often chosen for use based on their mode of action. In situations, when one herbicide is ineffective, another herbicide with a different mode of action may provide better results. For this reason, there is a constant need to develop effective herbicidal combinations to control the growth of unwanted plants/weeds.

Furthermore, selective control of unwanted plants/weeds in commercial crops, such as cereal crops, is a key challenge facing modern agriculture. Unwanted plants/weeds typically compete with the cereal crops for nutrients, water, light and space, and thereby failure to control the presence of unwanted plants/weeds in the cereal crops can decrease the yield of the cereal crops. These unwanted plants/weeds can also host a number of pests and diseases, which if transferred to the cereal crops can further reduce yield of the crops. Furthermore, the seeds of the unwanted plants/weeds may be inadvertently harvested along with the desired cereal crop, which can necessitate further treatment or processing of the harvested cereal crop, or in extreme cases the harvested cereal crop may be discarded completely. There is, therefore, a clear need for effective herbicidal combinations, which are capable of controlling the growth of unwanted plants/weeds to prevent contamination of crops.

Many herbicides have been developed to control the growth of unwanted plants/weeds. Such herbicides include paraquat, glufosinate, glyphosate, and the like. However, these herbicides are non-selective and thus cannot be used to selectively control the growth of unwanted plants/weeds in crops, such as cereal crops, as the effect of such herbicides might damage the crop along with the unwanted plants/weed. To overcome this, it is therefore necessary to use selective herbicidal combinations which are capable of controlling unwanted plants/weed growth whilst sparing the crop.

A known herbicide is napropamide, also known as N,N-diethyl-2-(α-naphthoxy) propionamide. The structure of napropamide is as shown below.

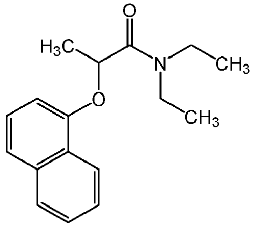

Napropamide contains a chiral carbon atom and hence napropamide exists in two stereo-isomeric forms, one form being the D-isomer (D-napropamide), also known as the (R)-isomer, and the other form being the L-isomer (L-napropamide), also known as the (S)-isomer.

The D-isomer, D-napropamide, is also referred to as Napropamide-M, and its structure is as shown below.

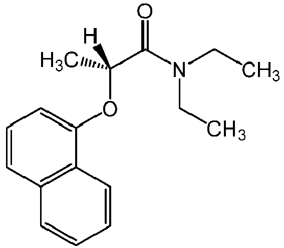

Napropamide-M can be prepared by any suitable method known in the art, such as the method disclosed in publication WO2009004642.

Unless otherwise stated, and as discussed further below, the term "napropamide" as used herein refers to N,N-diethyl-2-(α-naphthoxy) propionamide or an isomer thereof, or a mixture of such isomers. Accordingly, unless otherwise stated or otherwise clear from the context, the term napropamide may refer to a mixture of D-napropamide and L-napropamide. The mixture may for example be a racemic mixture (i.e., 1:1 mixture of D-napropamide and L-napropamide). The term napropamide also embraces pure isomers of N,N-diethyl-2-(α-naphthoxy) propionamide including, for example, D-napropamide.

At present, a large number of herbicidal combinations have been developed and used, but it is not always possible to control unwanted plants/weeds. Furthermore, cases of herbicide-resistant weeds have become increasingly common. Thus, there remains a need for new herbicidal combinations and methods of controlling unwanted plants/weeds in crops.

### OBJECTIVES OF THE DISCLOSURE

It is a primary objective of the present disclosure to provide a herbicidal combination comprising napropamide/napropamide-M and a second herbicide thereof.

It is yet another objective of the present disclosure to provide a herbicidal composition comprising napropamide/napropamide-M and a second herbicide thereof.

It is another objective of the present disclosure to provide use of a herbicidal combination comprising napropamide/napropamide-M and a second herbicide thereof for selective control of unwanted plants/weeds in cereal crops.

It is another objective of the present disclosure to provide a method for selectively controlling growth of unwanted plants/weed in cereal crops, said method comprising applying herbicidal combinations to said plant or to a locus thereof.

### SUMMARY OF THE DISCLOSURE:

In one aspect of the present disclosure, the invention provides a herbicidal combination comprising napropamide/napropamide-M and a second herbicide thereof.

In yet another aspect, the present disclosure provides a herbicidal composition comprising napropamide/napropamide-M and a second herbicide thereof.

In another aspect, the present disclosure provides use of a herbicidal combination comprising napropamide/napropamide-M and a second herbicide thereof for selective control of unwanted plants/weeds.

In another aspect, the present disclosure provides a method for controlling unwanted plants/weeds, said method comprising applying to said plant or to a locus thereof, a herbicidal composition comprising napropamide/napropamide-M and a second herbicide thereof.

Additional features and advantages of the present disclosure will be apparent from the detailed description that follows, which illustrates by way of example, the most preferred features of the present disclosure which are not to be construed as limiting the scope of the disclosure described herein.

### DETAILED DESCRIPTION OF THE DISCLOSURE

The present disclosure now will be described hereinafter with reference to the accompanying examples, in which embodiments of the disclosure are shown. This description is not intended to be a detailed catalogue of all the different ways in which the disclosure may be implemented, or all the features that may be added to the instant disclosure. For example, features illustrated with respect to one embodiment may be incorporated into other embodiments, and features illustrated with respect to a particular embodiment may be deleted from that embodiment. Thus, the disclosure contemplates that in some embodiments of the disclosure, any feature or combination of features set forth herein can be excluded or omitted. In addition, numerous variations and additions to the various embodiments suggested herein will be apparent to those skilled in the art in light of the instant disclosure, which do not depart from the instant disclosure. Hence, the following descriptions are intended to illustrate some particular embodiments of the disclosure, and not to exhaustively specify all permutations, combinations and variations thereof.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the disclosure, suitable methods and materials are described herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 10% or ± 5% of the stated value.

Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. All methods described herein can be performed in a suitable order unless otherwise indicated herein or otherwise clearly contradicted by context.

The use of the terms "a", "an" and "the" and similar referents (especially in the context of the following claims) are to be construed to cover both the singular and the plural, unless otherwise indicated herein or clearly contradicted by context. The terms first, second etc., as used herein are not meant to denote any particular ordering, but simply for convenience to denote a plurality of, for example, layers.

The terms "comprising", "having", "including", and "containing" are to be construed as open-ended terms (i.e., meaning "including, but not limited to") unless otherwise noted.

The use of any and all examples, or exemplary language (e.g., "such as"), is intended merely to better illustrate the disclosure and does not pose a limitation on the scope of the disclosure unless otherwise claimed. No language in the specification should be construed as indicating any non-claimed element as essential to the practice of the disclosure as used herein.

While the disclosure has been described with reference to an exemplary embodiment, it will be understood by those skilled in the art that various changes may be made, and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiment disclosed as the best mode contemplated for carrying out this disclosure, but that the disclosure will include all embodiments falling within the scope of the appended claims.

The term "control" relates to a weed, includes control of the weed, as well as protecting a plant, a portion of the plant, or a plant seed from attack or invasion by said weed.

The expression of various quantities in terms of "%" or "% w/v" means the percentage by weight of the total solution or composition unless otherwise specified.

The term 'herbicide' as used herein denotes a compound which controls or modifies the growth of undesired weeds/plants.

The term `herbicidally effective amount' indicates the quantity of such a compound or combination of such compounds which is capable of controlling or modifying effect on the growth of harmful plants/undesired vegetation/weeds. Controlling effects include all deviation from natural development, for example: killing, retardation, leaf burn, albinism, dwarfism, etc.

As used herein, the term 'pre-emergence' refers to the time point before seedlings emerge from the ground. When any herbicide is applied at pre-emergence stage, it prevents establishment of the germinated weed seedlings.

As used herein, the term 'post-emergence' refers to the time point after seedlings emerge from the ground. When any herbicide is applied at post-emergence stage, it prevents growth of the germinated weed seedlings.

The term "plants" refer to all physical parts of a plant, including seeds, seedlings, saplings, roots, tubers, stems, stalks, foliage and fruits.

The term "locus" refers to an area of planted crops or a location where the weeds occur or grows or can occur or grow and is intended to include soil, medium of growth other than soil. The disclosure provides combinations comprising napropamide/napropamide-M for selective control of a weed growing at a locus of a cereal crop; wherein the combination comprising napropamide/napropamide-M is applied at the locus of the cereal crop.

The term "selective control" means that the herbicide combination is capable of controlling the growth of one species of plant whilst allowing the growth of another. Thus, the selective control of a weed means that the growth of the weed is controlled whilst the growth of other non-weed plants such as cereal crops is not controlled or is controlled to a significantly lesser extent as compared to the weed. Typically, controlling the growth of a weed involves preventing the germination, rooting or growth of the weed plant. Often, controlling the growth of a weed involves retarding or stopping the rate of growth of the weed plant. Controlling the growth of a weed may also involve preventing or retarding root development. Controlling the growth of a weed may also involve inhibiting cell division thereby preventing development of roots or foliage, particularly development of roots. Controlling the growth of a weed may also involve preventing, inhibiting or retarding germination of a seed of the weed. After application of the herbicidal combination the growth of a weed may be relatively reduced as compared to the growth of a weed in the absence of the herbicidal combination. Often, the growth of a weed after application of the herbicidal combination is suppressed by at least 50%, preferably at least 60%, preferably at least 70%, preferably at least 80%, preferably at least 90%, more preferably at least 95%, preferably at least 97%, preferably at least 98%, or preferably at least 99% as compared to the growth of the weed in the absence of the herbicidal combination. In the disclosure, the herbicidal combination comprises napropamide/napropamide-M and a second herbicide thereof.

The inventors of the present disclosure have surprisingly found that herbicidal combinations comprising napropamide/napropamide-M are capable of effectively and selectively controlling the growth of unwanted plants/weeds in cereal crops. As described in the present disclosure, the inventors have shown that when combinations comprising napropamide/napropamide-M are applied to cereal crops, the cereal crop itself is selectively spared whilst weeds, including common grass-type weeds, are selectively targeted. This finding is advantageous in view of the fact that both the cereal crops and grass-type weeds are monocotyledonous. Therefore, finding a herbicidal combination that demonstrates selectivity between different classes of monocotyledonous plants is not an easy exercise because such selectivity cannot be predicted. It was therefore unexpected that combinations comprising napropamide/napropamide-M are able to control one class of monocotyledonous plant, namely grass-type weeds, yet at the same time spare another class of monocotyledonous plant, such as cereal crops.

The herbicidal combination comprises napropamide/napropamide-M and a second herbicide thereof. Alternatively, the combination may be administered in the form of a composition comprising one or more further components such as one or more agrochemically acceptable excipient, diluent, adjuvant and/or safener.

Accordingly, selective control of a weed growing at a locus of a cereal crop typically involves preventing the germination, rooting or growth of the weed whilst not preventing the germination, rooting or growth of the cereal crop. For example, the growth of the cereal crop following application of the herbicide combination may be at least 50% as compared to that of the cereal crop in the absence of the herbicidal combination. More often, the growth of the cereal crop following application of the herbicidal combination may be at least 60%, preferably at least 70%, preferably at least 80%, preferably at least 90%, preferably at least 95%, preferably at least 97%, preferably at least 98%, preferably at least 99%, or preferably even 100% as compared to that of the cereal crop in the absence of the herbicidal combination. Most typically, the application of the herbicidal combination has no significant effect on the growth of the cereal crop whilst significantly controlling the growth of the unwanted plant/weed.

In the disclosure, the locus of the cereal crop is the area in the vicinity of the cereal crop in which selective control of a weed is required. In the disclosure, the locus may be, for example, a container such as a pot or grow-bag, a garden bed or a field. Usually in the disclosure, a locus is a field. The locus is any location at which a cereal crop has been planted or will be planted after application of the herbicidal combination. The locus is the area in which weed growth has occurred or would be expected to occur in the absence of the application of the herbicidal combination.

In the disclosure, the cereal crop planted or to be planted at the locus can be any cereal crop. In the disclosure, the term "crop" typically relates to a multitude of desired crop plants, i.e., cereal plants, but may also refer to just one desired crop plant, i.e., one cereal plant. The term "crop" thus embraces plants wherein the target portion of the plant (e.g., the seed) has already developed, or wherein the target portion of the plant has not yet developed, for example young or immature plants.

As those skilled in the art will appreciate, cereal crops are generally monocotyledonous species. Typically, the cereal crop is a monocotyledonous cereal crop. In the disclosure, the cereal crop is typically selected from wheat, barley, rice, maize, sorghum, oats, rye, millet, triticale and fonio. Sometimes, the cereal crop is selected from barley, rice, maize, sorghum, oats, rye, millet, triticale and fonio. Usually, in the disclosure, the cereal crop is selected from wheat, barley, rice, and maize. More often, in the disclosure, the cereal crop is selected from wheat, rice and maize. Still more often, in the disclosure, the cereal crop is selected from wheat and maize. Most often, in the disclosure the cereal crop is wheat.

In the disclosure, when the cereal crop is wheat, the wheat may be a winter wheat or a spring wheat. Usually, the wheat is a winter wheat. Those skilled in the art will appreciate that winter wheats are strains of wheat that are planted in the autumn and thus grow over winter. A typical winter wheat is soft wheat (winter), which has the European and Mediterranean Plant Protection Organisation (EPPO) code TRZAW. Thus, the winter wheat may be TRZAW. Winter wheats germinate and develop into young plants that remain in the vegetative phase during the winter and resume growth in early spring. For winter wheats, the physiological stage of heading (when the ear first emerges) is typically delayed until the plant experiences vernalization, usually following a period of about 30 to about 60 days at about 0°C to about 5°C.

In the disclosure, the weed which is selectively controlled is typically a monocotyledonous weed. Thus, the disclosure typically provides the use of herbicidal combinations comprising napropamide/napropamide-M for selective control of a monocotyledonous weed growing at a locus of monocotyledonous cereal crop; wherein said combinations comprising napropamide/napropamide-M are applied at the locus of the monocotyledonous cereal crop. In other words, the disclosure provides means for selectively controlling monocotyledonous weeds in monocotyledonous crops.

The genus of the weed selectively targeted in the disclosure is typically selected from *Alopecurus* (for example *Alopecurus myosuroides*)*, Echinochloa* (for example *Echinochloa crus-galli L.*), *Bromus* (for example *Bromus secalinus* or *Bromus tectorum L.*)*, Lolium (*for example *Lolium multiflorum Lam. (Italian ryegrass, LOLMU), Poa* and *Setaria* (for example *Setaria glauca L. Beauv.*) and *Raphanus (for example Raphanus sativus).*

For example, the weed may be one or more of the following species: *Alopecurus aequalis, Alopecurus albovii, Alopecurus anatolicus, Alopecurus apiatus, Alopecurus arundinaceus, Alopecurus aucheri, Alopecurus baptarrhenius, Alopecurus bonariensis, Alopecurus borii, Alopecurus bornmuelleri, Alopecurus brachystachus, Alopecurus bulbosus, Alopecurus carolinianus, Alopecurus creticus, Alopecurus dasyanthus, Alopecurus davisii, Alopecurus geniculatus, Alopecurus gerardii, Alopecurus glacialis, Alopecurus* × *haussknechtianus, Alopecurus heliochloides, Alopecurus himalaicus, Alopecurus hitchcockii, Alopecurus japonicas, Alopecurus laguroides, Alopecurus lanatus, Alopecurus longiaristatus, Alopecurus magellanicus, Alopecurus* × *marssonii, Alopecurus mucronatus, Alopecurus myosuroides, Alopecurus nepalensis, Alopecurus* × *plettkei, Alopecurus ponticus, Alopecurus pratensis, Alopecurus rendlei, Alopecurus saccatus, Alopecurus setarioides, Alopecurus textilis, Alopecurus turczaninovii, Alopecurus* × *turicensis, Alopecurus utriculatus, Alopecurus vaginatus, Alopecurus* × *winklerianus, Bromus aleutensis, Bromus alopecuros, Bromus anomalus, Bromus arenarius, Bromus arizonicus, Bromus arvensis, Bromus berteroanus, Bromus biebersteinii, Bromus briziformis, Bromus bromoideus, Bromus carinatus, Bromus cabrerensis, Bromus catharticus, Bromus ciliates, Bromus ciliates (inc. ssp. ciliates and richardsonii), Bromus commutatus, Bromus danthoniae, Bromus diandrus, Bromus erectus, Bromus exaltatus, Bromus fibrosus, Bromus frigidus, Bromus frondosus, Bromus grandis, Bromus grossus, Bromus hordeaceus, Bromus hordeaceus (inc. ssp. ferronii, hordeaceus, molliformis, pseudothominii and thominei), Bromus inermis, Bromus inermis (inc. ssp. inermis and pumpellianus), Bromus interruptus, Bromus japonicas, Bromus kalmia, Bromus kinabaluensis, Bromus koeieanus, Bromus kopetdagensis, Bromus laevipes, Bromus lanatipes, Bromus lanceolatus, Bromus latiglumis, Bromus Lepidus, Bromus luzonensis, Bromus macrostachys, Bromus madritensis, Bromus mango, Bromus marginatus, Bromus maritimus, Bromus mucroglumis, Bromus nottowayanus, Bromus orcuttianus, Bromus pacificus, Bromus polyanthus (inc. ssp. paniculatus and polyanthus), Bromus porter, Bromus pseudolaevipes, Bromus pseudosecalinus, Bromus pseudothominii, Bromus pubescens, Bromus ramosus (inc ssp. benekii and ramosus), Bromus rigidus, Bromus scoparius, Bromus secalinus, Bromus sitchensis, Bromus squarrosus, Bromus stamineus, Bromus sterilis, Bromus suksdorfii, Bromus tectorum, Bromus texensis, Bromus vulgaris, Bromus willdenowii, Echinochloa brevipedicellata, Echinochloa callopus, Echinochloa chacoensis, Echinochloa colona, Echinochloa crus-galli, Echinochloa crus-pavonis, Echinochloa elliptica, Echinochloa glabrescens, Echinochloa haploclada, Echinochloa helodes, Echinochloa holciformis, Echinochloa inundata, Echinochloa jaliscana, Echinochloa jubata, Echinochloa kimberleyensis, Echinochloa lacunaria, Echinochloa macrandra, Echinochloa muricata, Echinochloa obtusiflora, Echinochloa oplismenoides, Echinochloa oryzoides, Echinochloa paludigena, Echinochloa picta, Echinochloa pithopus, Echinochloa polystachya, Echinochloa praestans, Echinochloa pyramidalis, Echinochloa rotundiflora, Echinochloa telmatophila, Echinochloa turneriana, Echinochloa ugandensis, Echinochloa walteri, Lolium arundinaceum, Lolium canariense, Lolium giganteum, Lolium* × *hybridum, Lolium mazzettianum, Lolium multiflorum, Lolium perenne L., Lolium persicum, Lolium pratense, Lolium remotum, Lolium rigidum, Lolium saxatile, Lolium temulentum L, Setaria acromelaena, Setaria alonsoi, Setaria apiculata, Setaria appendiculata, Setaria arizonica, Setaria atrata, Setaria australiensis, Setaria austrocaledonica, Setaria barbata, Setaria barbinodis, Setaria bathiei, Setaria cernua, Setaria chondrachne, Setaria cinerea, Setaria clivalis, Setaria cordobensis, Setaria corrugate, Setaria dielsii, Setaria elementii, Setaria faberi, Setaria fiebrigii, Setaria finite, Setaria forbesiana, Setaria glauca L. Beauv., Setaria globulifera, Setaria gracillima, Setaria grandis, Setaria grisebachii, Setaria guizhouensis, Setaria hassleri, Setaria homonyma, Setaria humbertiana, Setaria hunzikeri, Setaria incrassate, Setaria intermedia, Setaria italic, Setaria jaffrei, Setaria kagerensis, Setaria lachnea, Setaria latifolia, Setaria leucopila, Setaria liebmannii, Setaria lindenbergiana, Setaria longipila, Setaria longiseta, Setaria macrosperma, Setaria macrostachya, Setaria madecassa, Setaria magna, Setaria megaphylla, Setaria mendocina, Setaria mildbraedii, Setaria montana, Setaria nepalense, Setaria nicorae, Setaria nigrirostris, Setaria oblongata, Setaria obscura, Setaria oplismenoides, Setaria orthosticha, Setaria palmeri, Setaria palmifolia, Setaria pampeana, Setaria paraguayensis, Setaria parodii, Setaria parviflora, Setaria paspalidioides, Setaria pauciflora, Setaria paucifolia, Setaria perrieri, Setaria petiolata, Setaria pflanzii, Setaria plicata, Setaria poiretiana, Setaria pseudaristata, Setaria pumila, Setaria queenslandica, Setaria restioidea, Setaria rigida, Setaria roemeri, Setaria rosengurttii, Setaria sagittifolia, Setaria scabrifolia, Setaria scandens, Setaria scheelei, Setaria scottii, Setaria seriata, Setaria setosa, Setaria sphacelata, Setaria stolonifera, Setaria submacrostachya, Setaria sulcata, Setaria surgens, Setaria tenacissima, Setaria tenax, Setaria texana, Setaria vaginata, Setaria vatkeana, Setaria verticillata, Setaria villosissima, Setaria viridis, Setaria vulpiseta, Setaria welwitschii,* and *Setaria yunnanensis.*

One beneficial aspect of the disclosure is the selective control of weeds in cereal crops wherein the weed is resistant to control by conventional selective herbicides apart from napropamide. Those skilled in the art will appreciate that a weed which is resistant to control by a given herbicide does not necessarily have to be completely unaffected by application of the herbicide. Rather, a weed which is resistant to control by a given herbicide may be capable of growing in the presence of the herbicide albeit at a lower level than would be the case in the absence of the herbicide. A weed which is resistant to control by a given herbicide but is not resistant to control by napropamide/napropamide-M may grow better in the presence of an effective amount of the herbicide than in the presence of an effective amount of a combination comprising napropamide. In other words, napropamide/napropamide-M may be more effective in controlling growth of the weed than the other herbicide. For example, a herbicide to which a given weed is resistant may typically exhibit less than 97% efficacy against that weed; in other words, at least 3% of the weed plants to which an effective amount of the herbicide has been applied may survive the application of the herbicide. More typically, such a herbicide may exhibit less than 95% efficacy against the weed, preferably less than 90% efficacy, preferably less than 80% efficacy, preferably less than 70% efficacy, preferably less than 60% efficacy, preferably less than 50% efficacy, preferably less than 40% efficacy, or preferably even lower such as less than 35% efficacy. In other words, typically at least 5% of the weed plants to which an effective amount of the herbicide has been applied survive application of the herbicide, such as at least 10% of the weed plants, preferably at least 20% of the weed plants, preferably at least 30% of the weed plants, preferably at least 40% of the weed plants, preferably at least 50% of the weed plants, preferably at least 60% of the weed plants, or even more such as more than 65% of the weed plants. By contrast, such weeds are typically more susceptible to control by a combination comprising napropamide/napropamide-M, for example, a combination comprising napropamide/napropamide-M is typically capable of supressing growth of such resistant weeds by at least 60%, preferably at least 70%, preferably at least 80%, preferably at least 90%, preferably at least 95%, preferably at least 97%, preferably at least 98%, or preferably at least 99% compared to the growth of the weed in the absence of the combination comprising napropamide. For example, for some weeds conventional herbicides are less than 50% effective, preferably less than 40% effective or even less effective, preferably less than 35% effective, and napropamide/napropamide-M is at least 60% effective, preferably at least 70% effective, preferably at least 80% effective, or preferably at least 90% effective.

Accordingly in an embodiment, the present disclosure provides a herbicidal combination.

In another embodiment, the present disclosure provides a herbicidal combination comprising an acetamide herbicide and a second herbicide thereof.

As used throughout the disclosure, the acetamide herbicide or other active ingredients for example a second herbicide, include their salts, esters, ethers, polymorphs including solvates and hydrates. A salt includes salts that retain the biological effectiveness and properties of the active ingredient, and which are not biologically or otherwise undesirable, and include derivatives of the disclosed compounds in which the parent compound is modified by making inorganic and organic, non-toxic, acid or base addition salts thereof. The salts can be synthesized from the parent compound by conventional chemical methods.

In an embodiment, the acetamide herbicide comprises diphenamid, naproanilide, napropamide and napropamide-M.

According to another embodiment, the acetamide herbicide is napropamide.

According to another embodiment, the acetamide herbicide is napropamide-M.

According to another embodiment, the acetamide herbicide is napropamide or napropamide-M.

In an embodiment, the present disclosure provides a herbicidal combination comprising an acetamide herbicide and a second herbicide thereof, wherein the acetamide herbicide is napropamide.

In an embodiment, the present disclosure provides a herbicidal combination comprising an acetamide herbicide and a second herbicide thereof, wherein the acetamide herbicide is napropamide-M.

In an embodiment, the present disclosure provides a herbicidal combination comprising napropamide, its salts, esters, isomers or derivatives thereof; and a second herbicide.

In an embodiment, napropamide comprises napropamide-M.

In an embodiment, the present disclosure provides a herbicidal combination comprising napropamide/napropamide-M and a second herbicide.

In an embodiment, the present disclosure provides a herbicidal combination for controlling weeds, the combination comprising napropamide/napropamide-M and a second herbicide.

In an embodiment, the herbicidal combination comprising napropamide comprises a second herbicide apart from napropamide.

In an embodiment, the herbicidal combination comprising napropamide-M comprises a second herbicide apart from napropamide-M.

In an embodiment, the herbicidal combination comprising napropamide/napropamide-M comprise a second herbicide apart from napropamide/napropamide-M.

In an embodiment, the second herbicide is selected from the group comprising very long-chain fatty acid synthesis inhibitors, deoxy-d-xylulose phosphate synthase inhibitors, solanesyl diphosphate synthase inhibitors, or combinations thereof.

In another preferred embodiment, the herbicidal combination comprising napropamide/napropamide-M comprises very long-chain fatty acid synthesis inhibitor as the second herbicide.

In another embodiment, the very long chain fatty acid synthesis inhibitor comprises α-chloroacetamides, α-thioacetamides, α-oxyacetamides, oxiranes, isoxazolines, azolyl-carboxamides, benzofuranes, thiocarbamates, and combinations thereof.

In another embodiment, the very long chain fatty acid synthesis inhibitor comprises acetochlor, alachlor, vernolate, piperophos, dimethenamid, metazachlor, metolachlor, pretilachlor, propachlor, dimethachlor, anilofos, esprocarb, dimepiperate, pethoxamid, tri-allate, cycloate, thiobencarb/benthiocarb, orbencarb, flufenacet, prosulfocarb, butachlor, mefenacet, molinate, S-ethyl dipropylthiocarbamate (EPTC), benfuresate, indanofan, cafenstrole, tridiphane, fenoxasulfone, ipfencarbazone, pyroxasulfone, ethofumesate, thenylchlor, propisochlor and fentrazamide.

In a preferred embodiment, the very long chain fatty acid synthesis inhibitor comprises ethofumesate, prosulfocarb, pyroxasulfone and propisochlor.

In another preferred embodiment, the second herbicide for the herbicidal combination comprising napropamide/napropamide-M is selected from ethofumesate, prosulfocarb, pyroxasulfone and propisochlor.

In an embodiment, the second herbicide is ethofumesate.

In an embodiment, the second herbicide is prosulfocarb.

In an embodiment, the second herbicide is pyroxasulfone.

In an embodiment, the second herbicide is propisochlor.

In another preferred embodiment, the herbicidal combination comprising napropamide/napropamide-M comprises deoxy-d-xylulose phosphate synthase inhibitors as the second herbicide.

In another embodiment, the deoxy-d-xylulose phosphate synthase inhibitor comprises isoxazolidinones.

In another embodiment, the isoxazolidinones comprise bixlozone and clomazone.

In another preferred embodiment, the deoxy-d-xylulose phosphate synthase inhibitor comprises bixlozone.

In an embodiment, the second herbicide is bixlozone.

In another preferred embodiment, the second herbicide for the herbicidal combination comprising napropamide/napropamide-M is bixlozone.

In another preferred embodiment, the herbicidal combination comprising napropamide/napropamide-M comprises solanesyl diphosphate synthase inhibitors as the second herbicide.

In another embodiment, the solanesyl diphosphate synthase inhibitor comprises aclonifen.

In an embodiment, the second herbicide is aclonifen.

In another preferred embodiment, the second herbicide for the herbicidal combination comprising napropamide/napropamide-M is aclonifen.

In another embodiment, the herbicidal combination of the present disclosure comprises: (a) an acetamide herbicide; and (b) a second herbicide thereof.

In an embodiment, herbicidal combination of the present disclosure comprises: (a) napropamide, its salts, esters, isomers or derivatives thereof; and (b) a second herbicide.

In an embodiment, napropamide comprises napropamide-M.

In another embodiment, the herbicidal combination of the present disclosure comprises: (a) napropamide/napropamide-M; and (b) a second herbicide.

In another embodiment, the herbicidal combination of the present disclosure comprises: (a) napropamide/napropamide-M; and (b) a very long-chain fatty acid synthesis inhibitor selected from the group comprising ethofumesate, prosulfocarb, pyroxasulfone and propisochlor.

In another embodiment, the herbicidal combination of the present disclosure comprises: (a) napropamide/napropamide-M; and (b) ethofumesate.

In another embodiment, the herbicidal combination of the present disclosure comprises: (a) napropamide/napropamide-M; and (b) prosulfocarb.

In another embodiment, the herbicidal combination of the present disclosure comprises: (a) napropamide/napropamide-M; and (b) pyroxasulfone.

In another embodiment, the herbicidal combination of the present disclosure comprises: (a) napropamide/napropamide-M; and (b) propisochlor.

In another embodiment, the herbicidal combination of the present disclosure comprises: (a) napropamide/napropamide-M; and (b) a deoxy-d-xylulose phosphate synthase inhibitor comprising bixlozone.

In another embodiment, the herbicidal combination of the present disclosure comprises: (a) napropamide/napropamide-M; and (b) bixlozone.

In another embodiment, the herbicidal combination of the present disclosure comprises: (a) napropamide/napropamide-M; and (b) a solanesyl diphosphate synthase inhibitor comprising aclonifen.

In another embodiment, the herbicidal combination of the present disclosure comprises: (a) napropamide/napropamide-M; and (b) aclonifen.

In another embodiment, the second herbicide is selected from the group comprising ethofumesate, prosulfocarb, pyroxasulfone, propisochlor, bixlozone and aclonifen.

In an embodiment, the herbicidal combination comprising napropamide/napropamide-M and a second herbicide thereof, further comprises a third herbicide.

In an embodiment, the present disclosure provides a herbicidal combination comprising napropamide/napropamide-M and a second herbicide; and further comprising a third herbicide.

In an embodiment, the present disclosure provides a herbicidal combination comprising napropamide/napropamide-M and a second herbicide; and optionally comprising a third herbicide.

In an embodiment, the present disclosure provides a herbicidal combination comprising napropamide/napropamide-M and a second herbicide selected from the group comprising very long-chain fatty acid synthesis inhibitors, deoxy-d-xylulose phosphate synthase inhibitors and solanesyl diphosphate synthase inhibitors; and further comprising a third herbicide.

In an embodiment, the present disclosure provides a herbicidal combination comprising napropamide/napropamide-M and a second herbicide selected from the group comprising very long-chain fatty acid synthesis inhibitors, deoxy-d-xylulose phosphate synthase inhibitors and solanesyl diphosphate synthase inhibitors; and optionally comprising a third herbicide.

In an embodiment, the third herbicide is selected from the group comprising phytoene desaturase inhibitors.

In another embodiment, phytoene desaturase inhibitor comprises phenyl-ethers, n-phenyl heterocycles, diphenyl heterocycles, and combinations thereof.

In a preferred embodiment, the phenyl-ethers comprise diflufenican, beflubutamid, and picolinafen.

In a preferred embodiment, the phenyl heterocycles comprise flurochloridone and norflurazon.

In a preferred embodiment, the diphenyl heterocycles comprise fluridone and flurtamone.

In a preferred embodiment, the phytoene desaturase inhibitor comprises diflufenican, beflubutamid, flurochloridone, fluridone, picolinafen, norflurazon and flurtamone.

In a preferred embodiment, the third herbicide is selected from the group comprising diflufenican, beflubutamid, flurochloridone, fluridone, picolinafen, norflurazon and flurtamone.

In an embodiment, the third herbicide is diflufenican.

In another preferred embodiment, the third herbicide for the herbicidal combination, comprising napropamide/napropamide-M and a second herbicide, is diflufenican.

In another embodiment, the herbicidal combination of the present disclosure comprises: (a) an acetamide herbicide; (b) a second herbicide; and (c) optionally a third herbicide.

In another embodiment, the herbicidal combination of the present disclosure comprises: (a) an acetamide herbicide; (b) a second herbicide; and (c) a third herbicide.

In an embodiment, herbicidal combination of the present disclosure comprises: (a) napropamide, its salts, esters, isomers or derivatives thereof; (b) a second herbicide; and (c) a third herbicide.

In an embodiment, napropamide comprises napropamide-M.

In another embodiment, the herbicidal combination of the present disclosure comprises: (a) napropamide/napropamide-M; (b) a second herbicide; and (c) a third herbicide.

In another embodiment, the herbicidal combination of the present disclosure comprises: (a) napropamide/napropamide-M; (b) a very long-chain fatty acid synthesis inhibitor selected from the group comprising ethofumesate, prosulfocarb, pyroxasulfone and propisochlor; and (c) a phytoene desaturase inhibitor selected from the group comprising diflufenican, beflubutamid, flurochloridone, fluridone, picolinafen, norflurazon and flurtamone.

In another embodiment, the herbicidal combination of the present disclosure comprises: (a) napropamide/napropamide-M; (b) ethofumesate; and (c) diflufenican.

In another embodiment, the herbicidal combination of the present disclosure comprises: (a) napropamide/napropamide-M; (b) prosulfocarb; and (c) diflufenican.

In another embodiment, the herbicidal combination of the present disclosure comprises: (a) napropamide/napropamide-M; (b) pyroxasulfone; and (c) diflufenican.

In another embodiment, the herbicidal combination of the present disclosure comprises: (a) napropamide/napropamide-M; (b) propisochlor; and (c) diflufenican.

In another embodiment, the herbicidal combination of the present disclosure comprises: (a) napropamide/napropamide-M; (b) a deoxy-d-xylulose phosphate synthase inhibitor comprising bixlozone; and (c) a phytoene desaturase inhibitor selected from the group comprising diflufenican, beflubutamid, flurochloridone, fluridone, picolinafen, norflurazon and flurtamone.

In another embodiment, the herbicidal combination of the present disclosure comprises: (a) napropamide/napropamide-M; (b) bixlozone; and (c) diflufenican.

In another embodiment, the herbicidal combination of the present disclosure comprises: (a) napropamide/napropamide-M; (b) a solanesyl diphosphate synthase inhibitor comprising aclonifen and (c) a phytoene desaturase inhibitor selected from the group comprising diflufenican, beflubutamid, flurochloridone, fluridone, picolinafen, norflurazon and flurtamone.

In another embodiment, the herbicidal combination of the present disclosure comprises: (a) napropamide/napropamide-M; (b) aclonifen; and (c) diflufenican.

In an embodiment, the herbicidal combination comprising napropamide/napropamide-M include a second herbicide selected from the group comprising very long-chain fatty acid synthesis inhibitor, deoxy-d-xylulose phosphate synthase inhibitor and solanesyl diphosphate synthase inhibitor; and optionally diflufenican.

In an embodiment, the herbicidal combination comprising napropamide/napropamide-M include a second herbicide selected from a group comprising very long-chain fatty acid synthesis inhibitor, deoxy-d-xylulose phosphate synthase inhibitor and solanesyl diphosphate synthase inhibitor; and diflufenican.

In a preferred embodiment, napropamide/napropamide-M is present in a concentration range of about 1 to about 700 g/L and the second herbicide is present in a concentration range of about 500 to about 1000 g/L.

In a preferred embodiment, napropamide/napropamide-M is present in a concentration range of about 50 to about 600 g/L and the second herbicide is present in a concentration range of about 600 to about 1000 g/L.

In a preferred embodiment, napropamide/napropamide-M is present in a concentration range of about 200 to about 550 g/L and the second herbicide is present in a concentration range of about 700 to about 900 g/L.

In a preferred embodiment, napropamide/napropamide-M is present in a concentration of about 450 g/L and the second herbicide is present in a concentration of about 800 g/L.

In a preferred embodiment, napropamide/napropamide-M is present in a concentration range of about 450 g/L.

In a preferred embodiment, prosulfocarb is present in a concentration range of about 800 g/L.

In another embodiment, the present invention provides a herbicidal combination comprising napropamide/napropamide-M and a second herbicide, wherein weight ratio of napropamide/napropamide-M to the second herbicide ranges from about 1:100 to about 100:1.

In a preferred embodiment, the weight ratio of napropamide/napropamide-M to the second herbicide is selected from ratios comprising 1:1, 10:1, 20:1, 30:1, 40:1, 50:1, 60:1, 70:1, 80:1, 90:1 and 100:1.

In a preferred embodiment, the weight ratio of napropamide/napropamide-M to the second herbicide is selected from ratios comprising 1:1, 1:10, 1:20, 1:30, 1:40, 1:50, 1:60, 1:70, 1:80, 1:90 and 1:100.

In a preferred embodiment, the weight ratio of napropamide/napropamide-M to the second herbicide is about 1:0.1 to about 1:10.

In a preferred embodiment, the weight ratio of napropamide/napropamide-M to the second herbicide is about 1:0.1 to about 1:5.

In a preferred embodiment, the weight ratio of napropamide/napropamide-M to the second herbicide is about 1:0.5 to about 1:3.

In a preferred embodiment, the weight ratio of napropamide/napropamide-M to the second herbicide is about 1:1 to about 1:3.

In a preferred embodiment, the weight ratio of napropamide/napropamide-M to prosulfocarb is 1:1.7.

In a preferred embodiment, the weight ratio of napropamide/napropamide-M to propisochlor is 1:1.6.

Accordingly in an embodiment, the present disclosure provides a herbicidal composition.

In another embodiment, the present disclosure provides a herbicidal composition comprising:
(a) an acetamide herbicide; and
(b) a second herbicide thereof.

In an embodiment, the present disclosure provides a herbicidal composition comprising:
(a) napropamide, its salts, esters, isomers or derivatives thereof; and
(b) a second herbicide.

In an embodiment, napropamide comprises napropamide-M.

In another embodiment, the present disclosure provides a herbicidal composition comprising:
(a) napropamide/napropamide-M; and
(b) a second herbicide;
wherein the second herbicide is selected from the group comprising ethofumesate, prosulfocarb, pyroxasulfone, propisochlor, bixlozone and aclonifen.

In another embodiment, the present disclosure provides a herbicidal composition comprising:
(a) napropamide/napropamide-M; and
(b) ethofumesate.

In another embodiment, the present disclosure provides a herbicidal composition comprising:
(a) napropamide/napropamide-M; and
(b) prosulfocarb.

In another embodiment, the present disclosure provides a herbicidal composition comprising:
(a) napropamide/napropamide-M; and
(b) pyroxasulfone.

In another embodiment, the present disclosure provides a herbicidal composition comprising:
(a) napropamide/napropamide-M; and
(b) propisochlor.

In another embodiment, the present disclosure provides a herbicidal composition comprising:
(a) napropamide/napropamide-M; and
(b) bixlozone.

In another embodiment, the present disclosure provides a herbicidal composition comprising:
(a) napropamide/napropamide-M; and
(b) aclonifen.

In another embodiment, the present disclosure provides a herbicidal composition comprising:
(a) an acetamide herbicide;
(b) a second herbicide; and
(c) optionally a third herbicide.

In an embodiment, the present disclosure provides a herbicidal composition comprising:
(a) napropamide, its salts, esters, isomers or derivatives thereof;
(b) a second herbicide; and
(c) optionally a third herbicide.

In an embodiment, napropamide comprises napropamide-M.

In another embodiment, the present disclosure provides a herbicidal composition comprising:
(a) napropamide/napropamide-M;
(b) a second herbicide; and
(c) optionally a third herbicide.

In another embodiment, the present disclosure provides a herbicidal composition comprising:
(a) napropamide/napropamide-M;
(b) a second herbicide; and
(c) a third herbicide.

In another embodiment, the present disclosure provides a herbicidal composition comprising:
(a) napropamide/napropamide-M;
(b) a second herbicide; and
(c) a third herbicide;
wherein the third herbicide is selected from the group comprising diflufenican, beflubutamid, flurochloridone, fluridone, picolinafen, norflurazon and flurtamone.

In another embodiment, the present disclosure provides a herbicidal composition comprising:
(a) napropamide/napropamide-M;
(b) a second herbicide; and
(c) diflufenican.

In another embodiment, the present disclosure provides a herbicidal composition comprising:
(a) napropamide/napropamide-M; and
(b) ethofumesate; and
(c) diflufenican.

In another embodiment, the present disclosure provides a herbicidal composition comprising:
(a) napropamide/napropamide-M; and
(b) prosulfocarb; and
(c) diflufenican.

In another embodiment, the present disclosure provides a herbicidal composition comprising:
(a) napropamide/napropamide-M; and
(b) pyroxasulfone; and
(c) diflufenican.

In another embodiment, the present disclosure provides a herbicidal composition comprising:
(a) napropamide/napropamide-M; and
(b) propisochlor; and
(c) diflufenican.

In another embodiment, the present disclosure provides a herbicidal composition comprising:
(a) napropamide/napropamide-M; and
(b) bixlozone; and
(c) diflufenican.

In another embodiment, the present disclosure provides a herbicidal composition comprising:
(a) napropamide/napropamide-M; and
(b) aclonifen; and
(c) diflufenican.

In another embodiment, the present disclosure provides a herbicidal composition comprising:
(a) napropamide/napropamide-M;
(b) a second herbicide; and
(c) at least one agrochemically acceptable excipient

In another embodiment, the present disclosure provides a herbicidal composition comprising:
(a) napropamide/napropamide-M;
(b) a second herbicide;
(c) optionally a third herbicide; and
(d) at least one agrochemically acceptable excipient

In another embodiment, the present disclosure provides a herbicidal composition comprising:
(a) napropamide/napropamide-M;
(b) a second herbicide;
(c) a third herbicide; and
(d) at least one agrochemically acceptable excipient

According to an embodiment of the present disclosure, the agrochemically acceptable excipients are selected from one or more of emulsifiers, colorants, thickeners/binders, antifreeze agents, antifoaming agents, antioxidants, solvents, preservatives, glidants, anticaking agents, pH-regulating agents, buffering agents, formulation aids, disintegrants, or combinations thereof.

In another embodiment, emulsifiers which can be advantageously employed herein can be readily determined by those skilled in the art and include various non-ionic, anionic, cationic, and amphoteric emulsifiers, or a blend of two or more emulsifiers. Examples of non-ionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

In an embodiment, thickener or gelling agent may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethyl ether, diethylene glycol monoethyl ether, triethylene glycol monomethyl ether, butoxyethanol, butylene glycol monobutyl ether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, antifoam agent may be selected from polydimethoxysiloxane, polydimethylsiloxane, alkyl poly acrylates, castor oil, fatty acids, fatty acids esters, fatty acids sulfate, fatty alcohol, fatty alcohol esters, fatty alcohol sulfate, foot olive oil, mono & di glyceride, paraffin oil, paraffin wax, poly propylene glycol, silicones oil, vegetable fats, vegetable fats sulfate, vegetable oil, vegetable oil sulfate, vegetable wax, vegetable wax sulfate, agents based on silicon or magnesium stearate.

In another embodiment, antioxidants are, for example, amino acids (e.g., glycine, histidine, tyrosine, tryptophan) and derivatives thereof, imidazole and imidazole derivatives (e.g., urocanic acid), peptides, such as, for example, D,L-carnosine, D-carnosine, L-carnosine and derivatives thereof (e.g., anserine), carotenoids, carotenes (e.g., α-carotene, β-carotene, lycopene) and derivatives thereof, lipoic acid and derivatives thereof (e.g., dihydrolipoic acid), aurothioglucose, propylthiouracil and further thio compounds (e.g., thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, γ-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g., buthionine sulfoximines, homocysteine sulfoximine, buthionine sulfones, penta-, hexa-, heptathionine sulfoximine) in very low tolerated doses (e.g., pmol/kg to pmol/kg), also metal chelating agents (e.g., α-hydroxy fatty acids, EDTA, EGTA, phytic acid, lactoferrin), α-hydroxy acids (e.g., citric acid, lactic acid, malic acid), humic acids, bile acid, bile extracts, gallic esters (e.g., propyl, octyl and dodecyl gallate), flavonoids, catechins, bilirubin, biliverdin and derivatives thereof, unsaturated fatty acids and derivatives thereof (e.g., γ-linolenic acid, linoleic acid, arachidonic acid, oleic acid), folic acid and derivatives thereof, hydroquinone and derivatives thereof (e.g., arbutin), ubiquinone and ubiquinol, and derivatives thereof, vitamin C and derivatives thereof (e.g., ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g., tocopheryl acetate, linoleate, oleate and succinate, tocophereth-5, tocophereth-10, tocophereth-12, tocophereth-18, tocophereth-50, tocophersolan), vitamin A and derivatives (e.g., vitamin A palmitate), the coniferyl benzoate of benzoin resin, rutin, rutinic acid and derivatives thereof, disodium rutinyl disulfate, cinnamic acid and derivatives thereof (e.g., ferulic acid, ethyl ferulate, caffeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g., selenomethionine), stilbenes and stilbene derivatives (e.g., stilbene oxide, trans-stilbene oxide). According to the disclosure, suitable derivatives (salts, esters, sugars, nucleotides, nucleosides, peptides, and lipids) and mixtures of these specified active ingredients or plant extracts (e.g., tea tree oil, rosemary extract and rosemarinic acid) which comprise these antioxidants can be used. In general, mixtures of the aforementioned antioxidants are possible.

According to an embodiment, examples of suitable solvents are water, oils of vegetable, or derivatives. In principle, solvent mixtures may also be used.

In another embodiment, suitable preservatives are for example benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl and benzoic acid & combination thereof

According to an embodiment of the present disclosure, the herbicidal composition comprises napropamide/napropamide-M in an amount ranging from about 1% to about 40% w/v of total weight of the composition.

According to an embodiment of the present disclosure, the herbicidal composition comprises the second herbicide in an amount ranging from about 1% to about 70% w/v of total weight of the composition.

According to an embodiment of the present disclosure, the herbicidal composition comprises said one or more agriculturally acceptable excipients in an amount ranging from about 1% to about 30% w/v of total weight of the composition.

According to an embodiment, the present disclosure provides a herbicidal composition comprising napropamide/napropamide-M and a second herbicide thereof, wherein the herbicidal composition is present in a form of a liquid formulation.

In an embodiment, the stable herbicidal composition is selected from Capsule suspension (CS), Dispersible concentrate (DC), Emulsion, water in oil (EO), Emulsion, oil in water (EW), Oil dispersion (OD), Oil miscible flowable concentrate (oil miscible suspension (OF), Oil miscible liquid (OL), Suspension concentrate (SC), soluble concentrate (SL) or Suspo-emulsion (SE).

In an embodiment, the present invention provides a liquid formulation comprising an acetamide herbicide and a second herbicide.

In an embodiment, the present invention provides a water-soluble liquid formulation comprising an acetamide herbicide and a second herbicide.

In an embodiment, the present invention provides a liquid formulation comprising napropamide, its salts, esters, isomers or derivatives thereof and a second herbicide.

In an embodiment, napropamide comprises napropamide-M.

In an embodiment, the present invention provides a liquid formulation comprising napropamide/napropamide-M and a second herbicide.

In an embodiment, the present invention provides a liquid formulation comprising napropamide/napropamide-M and ethofumesate.

In an embodiment, the present invention provides a liquid formulation comprising napropamide/napropamide-M and prosulfocarb.

In an embodiment, the present invention provides a liquid formulation comprising napropamide/napropamide-M and pyroxasulfone.

In an embodiment, the present invention provides a liquid formulation comprising napropamide/napropamide-M and propisochlor.

In an embodiment, the present invention provides a liquid formulation comprising napropamide/napropamide-M and bixlozone.

In an embodiment, the present invention provides a liquid formulation comprising napropamide/napropamide-M and aclonifen.

In an embodiment, the present invention provides a liquid formulation comprising an acetamide herbicide, a second herbicide and optionally a third herbicide.

In an embodiment, the present invention provides a liquid formulation comprising an acetamide herbicide, a second herbicide and a third herbicide.

In an embodiment, the present invention provides a liquid formulation comprising napropamide/napropamide-M, ethofumesate and diflufenican.

In an embodiment, the present invention provides a liquid formulation comprising napropamide/napropamide-M, prosulfocarb and diflufenican.

In an embodiment, the present invention provides a liquid formulation comprising napropamide/napropamide-M, pyroxasulfone and diflufenican.

In an embodiment, the present invention provides a liquid formulation comprising napropamide/napropamide-M, propisochlor and diflufenican.

In an embodiment, the present invention provides a liquid formulation comprising napropamide/napropamide-M, bixlozone and diflufenican.

In an embodiment, the present invention provides a liquid formulation comprising napropamide/napropamide-M, aclonifen and diflufenican.

In an embodiment, the present invention provides a liquid formulation comprising an acetamide herbicide, a second herbicide and optionally a third herbicide, either in the form of a tank mix or a pre-formulated (pre-mix)/ready-mix composition.

In an embodiment, the present invention provides a liquid formulation comprising an acetamide herbicide, a second herbicide and a third herbicide, either in the form of a tank mix or a pre-formulated (pre-mix)/ready-mix composition.

In an embodiment, the present invention provides a liquid formulation comprising an acetamide herbicide, a second herbicide and optionally a third herbicide, in the form of a tank mix composition.

In an embodiment, the present invention provides a liquid formulation comprising an acetamide herbicide, a second herbicide and a third herbicide, in the form of a tank mix composition.

In an embodiment, the present invention provides a tank mix formulation comprising an acetamide herbicide, a second herbicide and optionally a third herbicide.

In an embodiment, the present invention provides a tank mix formulation comprising an acetamide herbicide, a second herbicide and a third herbicide.

In another aspect, the present disclosure provides a process for the preparation of the present herbicidal composition, wherein the herbicidal composition comprises an acetamide herbicide, a second herbicide and optionally a third herbicide.

In another aspect, the present disclosure provides a process for the preparation of the present herbicidal composition, wherein the herbicidal composition comprises an acetamide herbicide, a second herbicide and a third herbicide.

Typically, in the disclosure, the herbicidal combination or composition comprising the combination is applied to the locus of the cereal crop at the pre-emergence stage of said weed. For example, the herbicidal combination can be applied to the locus at a known point after ploughing or with reference to growth of reference plants apart from the weed that have defined growth characteristics that can be monitored and correlated with the likely emergence of the weed.

In another embodiment of the disclosure, the herbicidal combination may be applied to said locus when said weed has partially grown. The herbicidal may be applied to the locus after emergence of the weed.

A known measure of plant growth is provided by the BBCH (Biologische Bundesanstalt, Bundessortenamt und Chemische Industrie) scale. The BBCH- scale is a scale used to identify the phenological development stages of a plant. A series of BBCH-scales have been developed for a range of species including cereal crops and weeds. The BBCH-scale uses a decimal code system, which is divided into principal and secondary growth stages.

Typically, application of the herbicidal combination to the locus involves application of the herbicidal combination to soil at the locus. Usually, the herbicidal combination is applied to the surface of the soil. However, when the herbicidal combination is applied to the locus when the weed has partially grown, especially when the weed has grown to a growth stage post emergence, for example to a growth stage of from BBCH_{weed} 09 to BBCH_{weed} 19, the herbicidal combination can be applied directly to the weed. The BBCH_{weed} 09 denotes emergence stage: cotyledons break through soil surface and the BBCH_{weed} 19 denotes stage where 9 or more true leaves, leaf pairs or whorls are unfolded. Typically, the herbicidal combination is applied by spraying in the form of a composition.

As mentioned above, the napropamide employed in the disclosure may be racemic napropamide, i.e., it may be a mixture of equal amounts of D-napropamide (also referred to as napropamide-M or (R)-napropamide) and L-napropamide (also referred to as (S)-napropamide). However, it is known that, of the two isomers of napropamide, the D-isomer is the only one to have significant herbicidal activity; D-napropamide may therefore be employed in preference to racemic napropamide. Often, therefore, the napropamide employed in the disclosure contains more D-napropamide than L-napropamide. For instance, the molar ratio of D-napropamide to L-napropamide, in the napropamide employed in the disclosure, may be greater than 1:1. The molar ratio of D-napropamide to L-napropamide employed may for instance be at least 3:2, or for instance at least 7:3, for instance at least 4:1, or at least 9:1. The napropamide employed in the disclosure may for instance be D-napropamide. Accordingly, the herbicidal combination is often substantially free or free of L-napropamide ((S)-napropamide). In other words, the disclosure does not exclude compositions comprising L-napropamide, wherein the active ingredients include D-napropamide. However, typically in the disclosure the herbicidal combination does not comprise L-napropamide. Thus, the napropamide employed in the disclosure may consist of D-napropamide.

In the disclosure, the herbicidal combination may be applied in any suitable amount to achieve control of the weed crop at the locus. The herbicidal combination may for instance be applied in an amount corresponding to from about 10 g/Ha to about 2 kg/Ha of D-napropamide, or for instance from about 10 g/Ha to about 1.5 kg/Ha of D-napropamide. For example, the herbicidal combination may be applied in an amount corresponding to from about 10 g/Ha to about 1 kg/Ha D-napropamide. For example, the herbicidal combination may be applied from a suspension concentrate comprising about 450 g/L of D-napropamide. Thus, a 0.1 L/Ha administration of such a composition corresponds to an administration of 45 g/Ha of D-napropamide. Similarly, a 0.4 L/Ha administration of such a composition corresponds to an administration of 180 g/Ha of D-napropamide; a 0.7 L/Ha administration of such a composition corresponds to an administration of 315 g/Ha of D-napropamide; a 1 L/Ha administration of such a composition corresponds to an administration of 450 g/Ha of D-napropamide; a 1.4 L/Ha administration of such a composition corresponds to an administration of 630 g/Ha of D-napropamide; and a 1.7 L/Ha administration of such a composition corresponds to an administration of 765 g/Ha of D-napropamide, etc.

More often, in the disclosure, the herbicidal combination is applied in an amount corresponding to from about 400 g/Ha to about 700 g/Ha D-napropamide. The inventors have found that such administration levels are particularly advantageous as the long-term effects on the crop (e.g., measured from about 25 to about 54 days after anthesis, DAA) may be improved at such administration levels; whilst the activity against weeds is not reduced. For example, administration regimes corresponding to from about 1 to about 1.5 L/Ha of a suspension concentrate comprising about 450 g/L of D-napropamide have been found to be particularly advantageous.

It should be emphasised that each amount of napropamide in g or kg recited in the preceding two paragraphs is an amount of the D-isomer, i.e., D-napropamide, not a total amount of napropamide including both D-napropamide and L-napropamide. As discussed hereinbefore, the herbicidal combination may or may not comprise L-napropamide in addition to the D-napropamide (for instance it may contain racemic napropamide). If the herbicidal combination does not contain any L-napropamide, i.e., if the napropamide employed in the herbicidal composition is only D-napropamide, then each value given above in the preceding two paragraphs for the amount of D-napropamide will be the same as the total amount of napropamide in the herbicidal combination. If on the other hand the napropamide employed in the herbicide is racemic napropamide, and therefore contains a 1:1 molar ratio of D-napropamide and L-napropamide, each value given above in the preceding two paragraphs for the amount of D-napropamide will be half the total amount of napropamide in the herbicidal combination that is applied including both D- and L-napropamide.

For example, in some embodiments the napropamide employed in the disclosure is racemic napropamide and the total amount of napropamide including both the D- and L-isomers will be double the amount specified above for D-napropamide. Thus, in some embodiments, the napropamide employed in the herbicidal combination is racemic napropamide and the herbicide may be applied to achieve control of the weed crop at the locus in an amount corresponding to from about 20 g/Ha to about 4 kg/Ha of racemic napropamide, or for instance from about 20 g/Ha to about 3 kg/Ha of racemic napropamide. For example, the herbicidal combination comprising napropamide may be applied in an amount corresponding to from about 20 g/Ha to about 2 kg/Ha racemic napropamide. For example, the herbicide may be applied from a suspension concentrate comprising about 450 g/L of racemic napropamide. Thus, a 0.2 L/Ha administration of such a composition corresponds to an administration of 90 g/Ha of racemic napropamide. Similarly, a 0.8 L/Ha administration of such a composition corresponds to an administration of 360 g/Ha of racemic napropamide; a 1.4 L/Ha administration of such a composition corresponds to an administration of 630 g/Ha of racemic napropamide; a 2 L/Ha administration of such a composition corresponds to an administration of 900 g/Ha of racemic napropamide; a 2.8 L/Ha administration of such a composition corresponds to an administration of 1260 g/Ha of racemic napropamide; and a 3.4 L/Ha administration of such a composition corresponds to an administration of 1530 g/Ha of racemic napropamide, etc.

In some embodiments of the disclosure, the napropamide is racemic napropamide and the herbicide combination comprising napropamide is applied in an amount corresponding to from about 800 g/Ha to about 1400 g/Ha racemic napropamide. Such administration levels are particularly advantageous as the long-term effects on the crop (e.g., measured from about 25 to about 54 days after anthesis, DAA) may be improved at such administration levels; whilst the activity against weeds is not reduced. For example, administration regimes corresponding to from about 2 to about 3 L/Ha of a soluble concentrate comprising about 450 g/L of racemic napropamide are particularly advantageous.

In another embodiment, the present disclosure provides use of the present herbicidal combination for controlling weeds in cereal crops, wherein the herbicidal combination comprises an acetamide herbicide and a second herbicide.

In another embodiment, the present disclosure provides use of the present herbicidal combination for controlling weeds in cereal crops, wherein the herbicidal combination comprises napropamide, its salts, esters, isomers or derivatives thereof and a second herbicide.

In an embodiment, napropamide comprises napropamide-M.

In another embodiment, the present disclosure provides use of the present herbicidal combination for controlling weeds in cereal crops, wherein the herbicidal combination comprises napropamide/napropamide-M and a second herbicide.

In another embodiment, the present disclosure provides use of the present herbicidal combination for controlling weeds in cereal crops, wherein the herbicidal combination comprises napropamide/napropamide-M and a second herbicide.

In another embodiment, the present disclosure provides use of the present herbicidal combination for controlling weeds in cereal crops, wherein the herbicidal combination comprises napropamide/napropamide-M and ethofumesate.

In another embodiment, the present disclosure provides use of the present herbicidal combination for controlling weeds in cereal crops, wherein the herbicidal combination comprises napropamide/napropamide-M and prosulfocarb.

In another embodiment, the present disclosure provides use of the present herbicidal combination for controlling weeds in cereal crops, wherein the herbicidal combination comprises napropamide/napropamide-M and pyroxasulfone.

In another embodiment, the present disclosure provides use of the present herbicidal combination for controlling weeds in cereal crops, wherein the herbicidal combination comprises napropamide/napropamide-M and propisochlor.

In another embodiment, the present disclosure provides use of the present herbicidal combination for controlling weeds in cereal crops, wherein the herbicidal combination comprises napropamide/napropamide-M and bixlozone.

In another embodiment, the present disclosure provides use of the present herbicidal combination for controlling weeds in cereal crops, wherein the herbicidal combination comprises napropamide/napropamide-M and aclonifen.

In another embodiment, the present disclosure provides use of the present herbicidal combination for controlling weeds in cereal crops, wherein the herbicidal combination comprises napropamide/napropamide-M, a second herbicide and optionally a third herbicide.

In another embodiment, the present disclosure provides use of the present herbicidal combination for controlling weeds in cereal crops, wherein the herbicidal combination comprises napropamide/napropamide-M, a second herbicide and a third herbicide.

In another embodiment, the present disclosure provides use of the present herbicidal combination for controlling weeds in cereal crops, wherein the herbicidal combination comprises napropamide/napropamide-M, a second herbicide and diflufenican.

In another embodiment, the present disclosure provides use of the present herbicidal composition for controlling weeds, wherein the herbicidal composition comprises an acetamide herbicide and a second herbicide.

In another embodiment, the present disclosure provides use of the present herbicidal composition for controlling weeds, wherein the herbicidal composition comprises an acetamide herbicide, a second herbicide and optionally a third herbicide.

In another embodiment, the present disclosure provides use of the present herbicidal composition for controlling weeds, wherein the herbicidal composition comprises an acetamide herbicide, a second herbicide and a third herbicide.

In another embodiment, the present disclosure provides use of the present herbicidal combination for controlling weeds, wherein the herbicidal combination comprises napropamide, its salts, esters, isomers or derivatives thereof and a second herbicide.

In an embodiment, napropamide comprises napropamide-M.

In another embodiment, the present disclosure provides use of the present herbicidal composition for controlling weeds, wherein the herbicidal composition comprises napropamide/napropamide-M and a second herbicide.

In another embodiment, the present disclosure provides use of the present herbicidal combination for controlling weeds, wherein the herbicidal combination comprises napropamide, its salts, esters, isomers or derivatives thereof, a second herbicide and optionally a third herbicide.

In an embodiment, napropamide comprises napropamide-M.

In another embodiment, the present disclosure provides use of the present herbicidal composition for controlling weeds, wherein the herbicidal composition comprises napropamide/napropamide-M, a second herbicide and optionally a third herbicide.

In another embodiment, the present disclosure provides use of the present herbicidal composition for controlling weeds, wherein the herbicidal composition comprises napropamide/napropamide-M, a second herbicide and a third herbicide.

In another embodiment, the present disclosure provides use of the present herbicidal composition for controlling weeds, wherein the herbicidal composition comprises napropamide/napropamide-M, ethofumesate and diflufenican.

In another embodiment, the present disclosure provides use of the present herbicidal composition for controlling weeds, wherein the herbicidal composition comprises napropamide/napropamide-M, prosulfocarb and diflufenican.

In another embodiment, the present disclosure provides use of the present herbicidal composition for controlling weeds, wherein the herbicidal composition comprises napropamide/napropamide-M, pyroxasulfone and diflufenican.

In another embodiment, the present disclosure provides use of the present herbicidal composition for controlling weeds, wherein the herbicidal composition comprises napropamide/napropamide-M, propisochlor and diflufenican.

In another embodiment, the present disclosure provides use of the present herbicidal composition for controlling weeds, wherein the herbicidal composition comprises napropamide/napropamide-M, bixlozone and diflufenican.

In another embodiment, the present disclosure provides use of the present herbicidal composition for controlling weeds, wherein the herbicidal composition comprises napropamide/napropamide-M, aclonifen and diflufenican.

In another embodiment, the present disclosure provides a method for selectively controlling weeds growing at a locus of a cereal crop, said method comprising application of combinations comprising napropamide/napropamide-M to the locus, wherein a cereal crop is present at the locus or is planted at the locus after application of said combinations comprising napropamide/napropamide-M to the locus. The method may comprise application of the herbicidal combination to the locus followed by planting of the cereal crop or may comprise planting of the cereal crop followed by application of the herbicidal combination.

In another embodiment, the present disclosure provides a method for controlling weeds, the method comprises applying a herbicidal combination comprising napropamide, its salts, esters, isomers or derivatives thereof and a second herbicide, simultaneously or sequentially, to a plant or a locus thereof.

In an embodiment, napropamide comprises napropamide-M.

In another embodiment, the present disclosure provides a method for controlling weeds, the method comprises applying a herbicidal combination comprising napropamide/napropamide-M and a second herbicide, simultaneously or sequentially, to a plant or a locus thereof.

In another embodiment, the present disclosure provides a method for using the present herbicidal composition for controlling weeds in cereal crops, wherein the herbicidal composition comprises napropamide/napropamide-M and a second herbicide.

In another embodiment, the present disclosure provides a method for using the present herbicidal composition for controlling weed, e.g., *Lolium multiflorum Lam.* (Italian ryegrass, LOLMU) in cereal crops, wherein the herbicidal composition comprises napropamide/napropamide-M and a second herbicide.

In another embodiment, the present disclosure provides a method for controlling weeds, wherein the method comprises applying a herbicidal composition comprising a combination of napropamide/napropamide-M and a second herbicide in a range of about 10 to about 5000 g/Ha.

In another embodiment, the present disclosure provides a method for controlling weeds, wherein the method comprises applying a herbicidal composition comprising a combination of napropamide/napropamide-M and a second herbicide in a range of about 50 to about 4000 g/Ha.

In another embodiment, the present disclosure provides a method for controlling weeds, wherein the method comprises applying a herbicidal composition comprising a combination of napropamide/napropamide-M and a second herbicide in a range of about 100 to about 3000 g/Ha.

In another embodiment, the present disclosure provides a method for using the present herbicidal composition for controlling weeds, wherein the herbicidal composition comprises napropamide/napropamide-M and a second herbicide, wherein napropamide/napropamide-M is applied at a rate of about 315 g/Ha.

In another embodiment, the present disclosure provides a method for using the present herbicidal composition for controlling weeds, wherein the herbicidal composition comprises napropamide/napropamide-M and a second herbicide, wherein napropamide/napropamide-M is applied at a rate of about 750 g/Ha.

In another embodiment, the present disclosure provides a method for using the present herbicidal composition for controlling weeds, wherein the herbicidal composition comprises napropamide/napropamide-M and a second herbicide, wherein napropamide/napropamide-M is applied at a rate of about 1000 g/Ha.

In another embodiment, the present disclosure provides a method for using the present herbicidal composition for controlling weeds, wherein the herbicidal composition comprises napropamide/napropamide-M and a second herbicide, wherein napropamide/napropamide-M is applied at a rate of about 1500 g/Ha.

In another embodiment, the present disclosure provides a method for using the present herbicidal composition for controlling weeds, wherein the herbicidal composition comprises an acetamide herbicide and a second herbicide, wherein the second herbicide is applied at a rate of about 1600 g/Ha.

In another embodiment, the present disclosure provides a method for using the present herbicidal composition for controlling weeds, wherein the herbicidal composition comprises an acetamide herbicide and a second herbicide, wherein the second herbicide is applied at a rate of about 2400 g/Ha.

In another embodiment, the present disclosure provides a method for using the present herbicidal composition for controlling weeds, wherein the herbicidal composition comprises an acetamide herbicide and a second herbicide, wherein the second herbicide is applied at a rate of about 1000 g/Ha.

In another embodiment, the present disclosure provides a method for using the present herbicidal composition for controlling weeds, wherein the herbicidal composition comprises napropamide/napropamide-M and prosulfocarb, wherein prosulfocarb is applied at a rate of about 1600 g/Ha.

In another embodiment, the present disclosure provides a method for using the present herbicidal composition for controlling weeds, wherein the herbicidal composition comprises napropamide/napropamide-M and prosulfocarb, wherein prosulfocarb is applied at a rate of about 2400 g/Ha.

In another embodiment, the present disclosure provides a method for using the present herbicidal composition for controlling weeds, wherein the herbicidal composition comprises napropamide/napropamide-M and propisochlor, wherein propisochlor is applied at a rate of about 1000 g/Ha.

The disclosure also provides a locus for growing a cereal crop, wherein a weed and a cereal crop are both present at the locus and the locus has a herbicidal combination for selective control of the weed applied thereto, wherein said herbicidal combination comprises napropamide/napropamide-M and a second herbicide. The locus, which typically comprises soil suitable for growing the cereal crop, in addition to the weed, cereal crop and herbicidal composition themselves, may also be as further defined herein. For instance, the locus may be a container such as a pot or grow-bag, a garden bed or a field.

According to an embodiment of the present disclosure, the various components of the herbicidal composition can be used individually or already partially or completely mixed with one at least one other to prepare the composition according to the disclosure. It is also possible for them to be packaged and used further as composition such as a kit of parts.

The disclosure also provides a kit comprising napropamide/napropamide-M combinations for the selective control of weeds at a locus for growing a cereal crop and instructions for use. The instructions for use typically comprise instructions for the application of the napropamide/napropamide-M combinations to the locus. The cereal crop is present at the locus or is planted at the locus after application of said napropamide/napropamide-M combinations to the locus.

Typically, the kit comprises:
i) an acetamide herbicide, wherein the acetamide herbicide is napropamide, its salt, isomers, esters or derivatives thereof;
ii) a second herbicide; and
iii) optionally a third herbicide.
and optionally further comprises:
iv) instructions for use.

Typically, the kit comprises:
i) napropamide/napropamide-M;
ii) a second herbicide; and
iii) optionally a third herbicide.
and optionally further comprises:
iv) instructions for use.

Typically, the instructions for use comprise instructions directing a user to mix the components of the kit. Usually, the instructions for use comprise instructions directing a user to mix the components of the kit before application of the components of the kit to the locus.

Often, the components of the kit are packaged separately. However, the disclosure is not limited to kits in which the components are packaged separately. For example, the acetamide herbicide and the second herbicide may be packaged together or formulated together.

In embodiments of the kit of the disclosure in which the acetamide herbicide and the second herbicide are packaged separately, may be tank mixed before being administered to the locus. Typically, such an administration to the locus is by spraying.

Typically, in the kit of the disclosure, said napropamide is D-napropamide.

Typically, the instructions for use direct the user to administer the acetamide herbicide (i.e., the napropamide/napropamide-M or a composition comprising the napropamide) to a locus for growing a cereal crop; wherein the cereal crop is present at the locus or is planted at the locus after said administration. Often, the instructions for use direct the user to administer the acetamide herbicide (i.e., the napropamide/napropamide-M or a composition comprising the napropamide) to a locus for growing a cereal crop; wherein a weed and the cereal crop are both present at the locus. In other words, the instructions for use typically direct the user to administer the acetamide herbicide (i.e., napropamide/napropamide-M or a composition comprising napropamide) at the locus growing a cereal crop and a monocotyledonous weed.

Typically, the instructions for use direct the user to administer the acetamide herbicide (i.e., the napropamide/napropamide-M or a composition comprising the napropamide) to a cereal crop which is planted at the locus at a depth of at least 1 cm, e.g., at least 2 cm.

Typically, the instructions for use direct the user to administer the acetamide herbicide (i.e., the napropamide/napropamide-M or a composition comprising the napropamide) at a locus wherein the weed is present. Often, the instructions for use direct the user to administer the acetamide herbicide (i.e., the napropamide/napropamide-M or a composition comprising the napropamide) to a locus growing a cereal crop and a weed, wherein the weed is resistant to control by conventional selective herbicides apart from napropamide/napropamide-M.

Typically, the instructions for use direct the user to administer the acetamide herbicide (i.e., the napropamide/napropamide-M or a composition comprising the napropamide), to a locus growing a cereal crop and a monocotyledonous weed, along with a second herbicide.

In another embodiment, the herbicidal combination of napropamide/napropamide-M and second herbicide is effective in controlling the growth of target weeds and can be administered to improve the efficacy of weed control.

In one embodiment of the disclosure, the kits may include one or more, including all, components that may be used to prepare the herbicidal composition, e.g., kits may include active ingredients and/or dispersing agents. One or more of the components may already be combined together or pre-formulated. In those embodiments where more than two components are provided in a kit, the components may already be combined together and as such are packaged in a single container such as a vial, bottle, can, pouch, bag or canister.

The following examples illustrate the disclosure. They do not, however, limit the disclosure in any way. In particular, there are many measures of efficacy and selectivity of a herbicide composition when applied to a locus for growing a cereal crop, and so a negative result in any specific method is not determinative. It will be understood that the specification and examples are illustrative but not limiting of the present disclosure and that other embodiments within the spirit and scope of the disclosure will suggest themselves to those skilled in the art. Other embodiments can be practiced that are also within the scope of the present disclosure.

### EXAMPLES

### Example 1

Experiments were conducted to assess the efficacy of herbicidal combination comprising napropamide/napropamide-M to control a weed (LOLMU) which is resistant to control by conventional herbicides. Percentage efficacy of the herbicidal combination was determined over time (measured as days after anthesis, [DAA]) following application of the herbicidal combination comprising napropamide/napropamide-M and prosulfocarb. The herbicidal combination was applied by spraying to LOLMU (S-strain) at pre-emergence stage. The results of this experiment have been disclosed in Table 1.

**Table 1: Results of percentage (%) control**

| **Treatment** | **Dose (g/Ha)** | **Control in weed (%)** |
|---|---|---|
| Prosulfocarb 800 g/L | 2400 | 68.14 |
| Prosulfocarb 800 g/L | 5000 | 78.02 |
| Napropamide-M 450 g/L | 315 | 69.80 |
| Prosulfocarb 800 g/L + Napropamide-M 450 g/L | 2400 + 315 | 86.66 |
| Prosulfocarb 800 g/L + Napropamide-M 450 g/L | 1600 + 315 | 75.74 |

It was observed that the combination of napropamide/napropamide-M and prosulfocarb is effective in controlling the growth of target weeds and can be administered to increase the efficacy of weed control.

### Example 2

Experiments were conducted to assess the efficacy of herbicidal combination comprising napropamide/napropamide-M to control a weed, *Lolium multiflorum Lam.* (Italian ryegrass, LOLMU) in wheat crop. The weed is resistant to control by conventional herbicides. Percentage efficacy of the herbicidal combination was determined over time (measured as days after anthesis, [DAA]) following application of the herbicidal combination comprising napropamide/napropamide-M and propisochlor. The herbicide combination was applied by spraying to LOLMU at pre-emergence stage. The result of this experiment has been disclosed in Table 2.

**Table 2: Results of percentage (%) control**

| **Treatment** | **Concentration (g/L)** | **Dose (g/Ha)** | **Weed control (%)** | | |
|---|---|---|---|---|---|
| | | | **15 DAA** | **25 DAA** | **45 DAA** |
| Untreated control | - | - | 0 | 0 | 0 |
| Napropamid | 450 | 750 | 65 | 83 | 79 |
| Napropamid | 450 | 1000 | 72 | 86 | 82 |
| Propisochlor + Napropamid | 720 + 450 | 700 + 1000 | 100 | 99 | 100 |

Further, the effect of the herbicidal combination was also assessed for the weight of the weed in wheat crop and the results has been disclosed in Table 3.

**Table 3: Results of % decrease in weight of weed in wheat crop**

| **Treatment** | **Concentration (g/L)** | **Dose (g/Ha)** | **Weight of weed (g/m²)** | **% Decrease** |
|---|---|---|---|---|
| Untreated control | - | - | 2.89 | - |
| Napropamid | 450 | 750 | 2.11 | 27 |
| Napropamid | 450 | 1000 | 1.86 | 36 |
| Propisochlor | 720 | 800 | 760 | 74 |
| Propisochlor + Napropamid | 720+ 450 | 700+ 1000 | 620 | 79 |

It was observed that the combination of napropamide/napropamide-M and propisochlor is effective in controlling the growth of target weeds and can be administered to increase the efficacy of weed control.

## Claims

1. A herbicidal combination for controlling weeds, the combination comprising:
(a) napropamide, its salts, esters, isomers or derivatives thereof; and
(b) a second herbicide.

2. The combination as claimed in claim 1, wherein napropamide comprises napropamide-M.

3. The combination as claimed in claim 1, wherein the second herbicide is selected from the group comprising ethofumesate, prosulfocarb, pyroxasulfone, propisochlor, bixlozone and aclonifen.

4. The combination as claimed in claim 1, wherein the combination comprises napropamide/napropamide-M and ethofumesate.

5. The combination as claimed in claim 1, wherein the combination comprises napropamide/napropamide-M and prosulfocarb.

6. The combination as claimed in claim 1, wherein the combination comprises napropamide/napropamide-M and pyroxasulfone.

7. The combination as claimed in claim 1, wherein the combination comprises napropamide/napropamide-M and propisochlor.

8. The combination as claimed in claim 1, wherein the combination comprises napropamide/napropamide-M and bixlozone.

9. The combination as claimed in claim 1, wherein the combination comprises napropamide/napropamide-M and aclonifen.

10. The combination as claimed in claim 1, wherein the combination further comprises a third herbicide.

11. The combination as claimed in claim 10, wherein the third herbicide is diflufenican.

12. Use of a herbicidal combination comprising napropamide/napropamide-M and a second herbicide, for controlling weeds.

13. The use as claimed in claim 12, wherein the herbicidal combination comprising napropamide/napropamide-M and the second herbicide, controls weed in cereal crops.

14. A herbicidal composition for controlling weeds, the composition comprising:
(a) napropamide, its salts, esters, isomers or derivatives thereof;
(b) a second herbicide; and
(c) at least one agrochemically acceptable excipient.

15. The composition as claimed in claim 14, wherein napropamide comprises napropamide-M.

16. The composition as claimed in claim 14, wherein the second herbicide is selected from the group comprising ethofumesate, prosulfocarb, pyroxasulfone, propisochlor, bixlozone and aclonifen.

17. The composition as claimed in claim 14, wherein the composition further comprises a third herbicide.

18. The composition as claimed in claim 17, wherein the third herbicide is diflufenican.

19. The composition as claimed in claim 14, wherein the at least one agrochemically acceptable excipient is selected from the group consisting of surfactants, antifreeze agent, wetting agent, antifoaming agent, thickening agent, preservative, colorant, filler, and combinations thereof.

20. The composition as claimed in claim 14, wherein the at least one agrochemically acceptable excipient is present in an amount ranging from about 1% to about 30% w/v of total weight of the composition.

21. A method for controlling weeds, the method comprising:
applying a herbicidal combination comprising napropamide/napropamide-M and a second herbicide, simultaneously or sequentially, to a plant or a locus thereof.

22. The method as claimed in claim 21, wherein the second herbicide is selected from the group comprising ethofumesate, prosulfocarb, pyroxasulfone, propisochlor, bixlozone and aclonifen.

23. The method as claimed in claim 21, wherein the combination further comprises a third herbicide.

24. The method as claimed in claim 23, wherein the third herbicide is diflufenican.

25. The method as claimed in claim 21, wherein the method comprises applying the herbicidal combination comprising napropamide/napropamide-M and the second herbicide in a range of about 100 to about 3000 g/Ha.
